# EUROPEAN PATENT APPLICATION

(11) **EP 4 567 490 A1**
(43) Date of publication of application: **11.06.2025**
(21) Application number: 24216962.1
(22) Date of filing: 02.12.2024
(51) Int. Cl.: G02B 7/02, H04N 23/55, G02B 7/04, G02B 7/08, G02B 27/01

(54) **ADJUSTABLE-FOCUS LENS ASSEMBLY**

(30) Priority: 06.12.2023 US 202363606762 P; 20.11.2024 US 202418953857
(71) Applicant: Meta Platforms Technologies, LLC, Menlo Park, CA 94025 (US)
(72) Inventor: Li, Likai, Menlo Park CA 94025 (US); Lerner, Scott, Menlo Park CA 94025 (US); Hu, Te, Menlo Park CA 94025 (US); Brookmire, Michael Andrew, Menlo Park CA 94025 (US); Hazegh, Cina, Menlo Park CA 94025 (US); Huang, Lidu, Menlo Park CA 94025 (US)
(74) Representative: Murgitroyd & Company

(57) **Abstract**

A digital camera module includes a housing, an image sensor, a fixed lens assembly, and an adjustable lens assembly. The fixed lens assembly is at least partially coupled to the housing. The adjustable lens assembly is positioned within the housing between the image sensor and the fixed lens assembly. The adjustable lens assembly is configured to selectively modify a focal length of the digital camera module.

## Description

### TECHNICAL FIELD

This disclosure relates generally to optics, and in particular to cameras.

### BACKGROUND INFORMATION

Cameras have become ubiquitous as they are placed in an increasing number of devices such as smartphones, tablets, watches, and action cameras. Resolution, dynamic range, signal quality, and image acquisition time are key performance metrics for cameras and the image sensors that are included in cameras. As cameras get smaller to be included in additional contexts and use-cases, some or all of these performance metrics become more difficult to meet. In addition, it is desirable for cameras to be resistant to external contaminants so that they may be deployed in a variety of contexts.

### SUMMARY

According to an aspect, there is provided a digital camera module comprising:
a housing;
an image sensor;
a fixed lens assembly at least partially coupled to the housing; and
an adjustable lens assembly positioned within the housing between the image sensor and the fixed lens assembly, wherein the adjustable lens assembly is configured to selectively modify a focal length of the digital camera module.

The fixed lens assembly may seal an opening of the housing.

The adjustable lens assembly may include an optical element, suspension arms, and side supports, wherein the suspension arms are configured to selectively retract to displace the optical element along an optical axis of the adjustable lens assembly.

The suspension arms may include two upper arms and two lower arms, wherein the two upper arms are configured to displace the optical element towards the fixed lens assembly, wherein the two lower arms are configured to displace the optical element towards the image sensor.

The suspension arms may include micro-electromechanical systems, MEMS, devices or include springs.

The adjustable lens assembly may be configured to modify the focal length of the digital camera module with focusing breathing effect that is imperceptible to a user of the digital camera module.

The fixed lens assembly may include a plurality of optical elements optically aligned to direct incident light towards the adjustable lens assembly.

An outermost lens of the plurality of optical elements may include glass.

An outermost lens of the plurality of optical elements may include plastic. The plastic outermost lens may be covered by a hard-coating.

The housing may be wider than an outermost lens of the plurality of optical elements.

An interface between the housing and an outermost lens of the plurality of optical elements may be waterproof.

The outermost lens may be a negative meniscus lens.

The outermost lens may have a larger width than the other optical elements in the fixed lens assembly. The adjustable lens assembly may include an adjustable lens that is wider than each of the plurality of optical elements in the fixed lens assembly.

The adjustable lens assembly may include an optical element, ball bearings, side supports, and rails. The ball bearings may be disposed between the side supports and the rails coupled to a perimeter of the optical element in the adjustable lens assembly.

The adjustable lens assembly may include an optical element, guide mechanisms, and guide rods, the guide mechanisms positioned around the guide rods so that the guide rods run through a void in the guide mechanisms. The guide mechanisms may be coupled to a perimeter of the optical element.

According to another aspect, there is provided a head-mounted device comprising:
a frame; and
a digital camera module of the kind set out above.

The head-mounted device may further comprise:
a display configured to present display light to an eyebox region, wherein the
camera module is configured to capture images of an external environment of the head-mounted device, and wherein the images of the external environment are driven onto the display.

According to a further aspect, there is provided a wearable comprising:
an image sensor;
a fixed lens assembly having an outermost lens that has a waterproof seal to prevent external contaminants from entering the fixed lens assembly and the image sensor; and
an adjustable lens assembly positioned between the image sensor and the fixed lens assembly, wherein the adjustable lens assembly is configured to selectively modify a focal length of the camera module.

It will be appreciated that any features described herein as being suitable for incorporation into one or more aspects or embodiments of the present disclosure are intended to be generalizable across any and all aspects and embodiments of the present disclosure. Other embodiments of the present disclosure can be understood by those skilled in the art in light of the description, the claims, and the drawings of the present disclosure. The foregoing general description and the following detailed description are exemplary and explanatory only and are not restrictive of the claims.

### BRIEF DESCRIPTION OF THE DRAWINGS

Non-limiting and non-exhaustive embodiments of the invention are described with reference to the following figures, wherein like reference numerals refer to like parts throughout the various views unless otherwise specified.
FIG. 1 illustrates a camera module with a lens stack that is adjusted along a z-axis to focus image light to an image sensor.
FIGs. 2A-2C illustrate example diagrams of digital camera modules, in accordance with embodiments of the disclosure.
FIG. 3A shows an example fixed lens assembly that includes an optical element with a glass refractive lens, in accordance with embodiments of the disclosure.
FIG. 3B shows an example fixed lens assembly that includes an optical element with a plastic refractive lens, in accordance with embodiments of the disclosure.
FIG. 4 illustrates a diagram of an example camera module that includes a fixed lens assembly and an adjustable lens, in accordance with embodiments of the disclosure.
FIG. 5 illustrates an example implementation of a head-mounted device that may incorporate the disclosed camera module, in accordance with embodiments of the disclosure.
FIG. 6 illustrates a head-mounted display (HMD) that may incorporate the disclosed camera module, in accordance with embodiments of the disclosure.

### DETAILED DESCRIPTION

Embodiments of an adjustable-focus lens assembly for a head-mounted device are described herein. In the following description, numerous specific details are set forth to provide a thorough understanding of the embodiments. One skilled in the relevant art will recognize, however, that the techniques described herein can be practiced without one or more of the specific details, or with other methods, components, materials, etc. In other instances, well-known structures, materials, or operations are not shown or described in detail to avoid obscuring certain aspects.

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

In some implementations of the disclosure, the term "near-eye" may be defined as including an element that is configured to be placed within 50 mm of an eye of a user while a near-eye device is being utilized. Therefore, a "near-eye optical element" or a "near-eye system" would include one or more elements configured to be placed within 50 mm of the eye of the user.

In embodiments of this disclosure, visible light may be defined as having a wavelength range of approximately 380 nm - 700 nm. Non-visible light may be defined as light having wavelengths that are outside the visible light range, such as ultraviolet light and infrared light. Infrared light having a wavelength range of approximately 700 nm - 1 mm includes near-infrared light. In embodiments of this disclosure, near-infrared light may be defined as having a wavelength range of approximately 700 nm - 1.6 µm.

In embodiments of this disclosure, the term "transparent" may be defined as having greater than 90% transmission of light. In some embodiments, the term "transparent" may be defined as a material having greater than 90% transmission of visible light.

Conventional camera lens assemblies include a lens stack having multiple lens elements. To adjust the focus, the lens stack is moved along an optical axis to change the focus of image light onto an image sensor. The lens stack is moved through an opening in housing of the camera, which makes it possible for external contaminants (including liquids) to enter the camera. Additionally, moving the entire mass of the lens stack requires significant electrical power and contributes to time-lag during focusing operations.

In implementations of the disclosure, an adjustable lens assembly is disposed between an image sensor and a fixed lens assembly. The fixed lens assembly is not moved during focusing operations while the adjustable lens assembly is moved. This may allow the fixed lens assembly to have a waterproof seal with respect to a housing of the camera module. Additionally, adjusting just the adjustable lens assembly (while not adjusting all the lens elements in a lens assembly) allows for quicker focusing operations that may also require less electrical power.

In yet another potentially advantageous embodiment of the disclosure, the "camera breathing" effect is reduced. The camera breathing effect is typically associated with Field of View (FOV) changes during autofocusing. By way of illustration, the FOV of a camera module typically narrows as the camera module is autofocused to a near-field object. When the camera module transitions from focusing on a near-field object (e.g. within 1 meter) to a far-field object (e.g. 2 meters or more), the FOV of the camera module widens. In implementations of the disclosure, the camera breathing effect may be reduced by approximately an order of magnitude due to only adjusting the adjustable lens assembly rather than the entire lens stack. In implementations of the disclosure, the lens may change focal length, which can mitigate the camera breathing effect. Reducing the camera breathing effect may be particularly helpful in Mixed Reality (MR) contexts when images captured by the camera are passed-through to be presented to a user on a display of a headset. Of course, reduction of the camera breathing effect is desirable in many contexts in addition to MR.

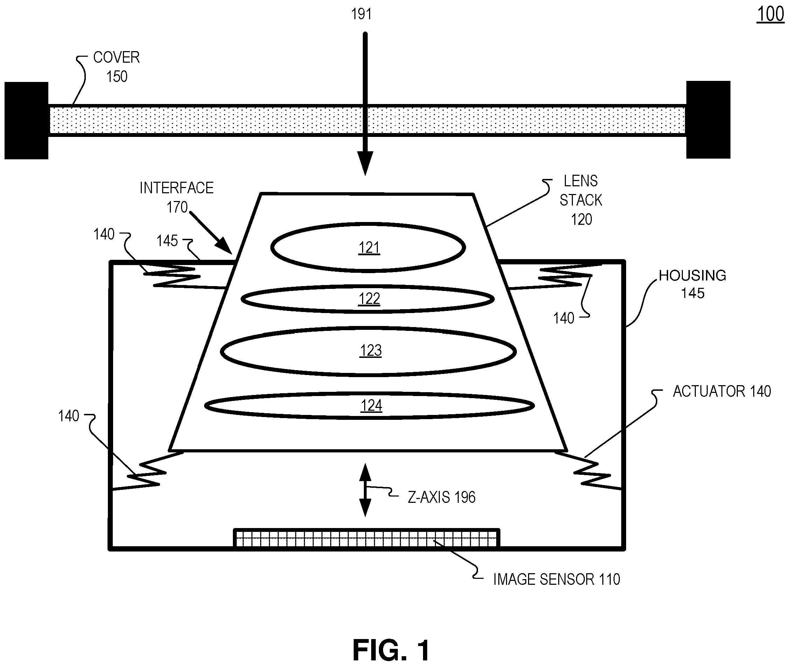

These and other implementations are described in more detail in association with FIGs. 1-6.

FIG. 1 illustrates a camera module 100 with a lens stack 120 that is adjusted along a z-axis 196 to focus image light 191 to image sensor 110. Lens stack 120 includes lens elements 121, 122, 123, and 124, in FIG. 1. Instead of the four lens elements illustrated in FIG. 1, lens stack 120 may include 5, 6, or 7 lens elements, for example. To adjust lens stack 120, actuators 140 are driven to move lens stack 120 closer or farther from image sensor 110.

FIG. 1 illustrates that lens stack 120 must move up and down through an opening in housing 145. Hence, an interface 170 between housing 145 and lens stack 120 is susceptible to allowing external contaminants (including liquids) into housing 145 of camera module 100. To mitigate this vulnerability, a cover window or cover glass 150 may be included with camera module 100 to prevent external contaminants from penetrating housing 145. However, cover 150 expands the physical footprint of camera module 100 and the larger size of cover 150 may negatively impact the aesthetic properties of the camera.

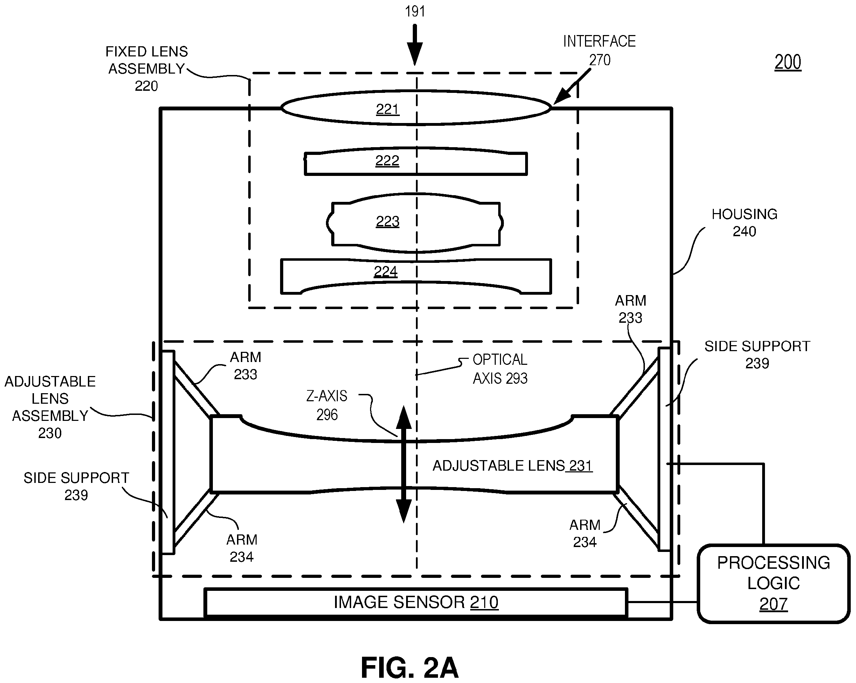

FIG. 2A illustrates an example diagram of a digital camera module 200, in accordance with embodiments of the disclosure. The digital camera module 200 includes various components configured to support autofocus functionality. Camera module 200 may also provide a sealed (e.g., waterproof) housing during focusing operations. The digital camera module 200 includes a housing 240, an image sensor 210, a fixed lens assembly 220, and an adjustable lens assembly 230.

The housing 240 may be cylindrical or cubicle and be configured to protect the image sensor 210 from dust, debris, or other environmental elements.

The image sensor 210 is configured to convert light (e.g., photons) into electrical signals that can be read as image data by processing logic 207. Image sensor 210 may be a complementary metal-oxide semiconductor (CMOS) image sensor, in some implementations. Image sensor 210 may be configured to receive visible light while rejecting (blocking out) non-visible light. In some implementations, one or more wavelength filters is disposed above images sensor 210. In some implementations a near-infrared filter that receives a narrow-band near-infrared wavelength may be placed over the image sensor 210 so it is sensitive to a narrow-band near-infrared wavelength while rejecting visible light and wavelengths outside the narrow-band.

Processing logic 207 may analyze the image data generated by image sensor 210 and determine whether additional adjustments should be made to the adjustable lens assembly 230. The image sensor 210 may be positioned in the housing 240 or may be coupled to a printed circuit board (PCB) that is coupled to the housing 240.

The fixed lens assembly 220 is at least partially coupled to or suspended from the housing 240. The fixed lens assembly 220 may include a number of lenses (e.g., three, four, five, etc.) that are positioned in a stacked configuration. In FIG. 2A, fixed lens assembly 220 includes a first optical element 221, a second optical element 222, a third optical element 223, and a fourth optical element 224. First optical element 221 may be considered the outermost optical element since it is closest to an outside environment of camera module 200. The optical elements in fixed lens assembly 220 may be diffractive lens or refractive lenses. Fixed lens assembly 220 may seal an opening of housing 240 at an interface 270 between lens element 221 and housing 240. The opening in housing 240 may be circular and lens element 221 may have a circular perimeter, in some implementations.

The lenses of the fixed lens assembly 220 may have optical axes that are aligned to focus external incident image light 191. By separating the adjustable lens assembly 230 from the fixed lens assembly 220, the digital camera module 200 may more quickly make autofocus adjustments and may adjust the focus using less power because combining the lens assemblies may cause the adjustment mechanism to have to move more weight during focus adjustment operations.

The adjustable lens assembly 230 may be positioned within the housing 240 between the image sensor 210 and the fixed lens assembly 220. The adjustable lens assembly 230 is configured to selectively modify a focal length of the digital camera module 200 by adjusting adjustable lens assembly 230 along z-axis 296 to focus image light 191 to image sensor 210. The focal length of the digital camera module 200 may be a focal length of the optical combination of the fixed lens assembly 220 and the adjustable lens assembly 230, according to an embodiment.

The adjustable lens assembly 230 may include an adjustable lens 231, two or more side supports 239, and a number of suspension arms 233 and 234. The adjustable lens 231 is an optical element configured to focus or disperse light from the fixed lens assembly 220 onto the image sensor 210. The adjustable lens 231 may be displaced along an optical axis 293 of the adjustable lens in the direction of fixed lens assembly 220 or in the direction of the image sensor 210.

The arms 233 and/or 234 may be configured to suspend the adjustable lens 231 and couple the adjustable lens 231 to the housing 240. The arms 233 and/or 234 may be suspension arms having elastic properties. The arms 233 and/or 234 are configured to selectively contract and elongate based on control signals received from processing logic 207. The arms 233 and/or 234 may be implemented as springs or as micro-electromechanical systems (MEMS) devices, according to an embodiment. In operation, the upper two arms 233 contract while the lower two arms 234 elongate to displace the adjustable lens 231 towards the fixed lens assembly 220. Conversely, the lower two arms 234 contract while the upper two arms 233 elongate to displace the adjustable lens 231 towards the image sensor 210. Although two upper arms 233 and two lower arms 234 are illustrated, more upper arms (e.g., four) and more lower arms (e.g., four) may be employed to selectively displace the adjustable lens 231, according to various implementations of the disclosure.

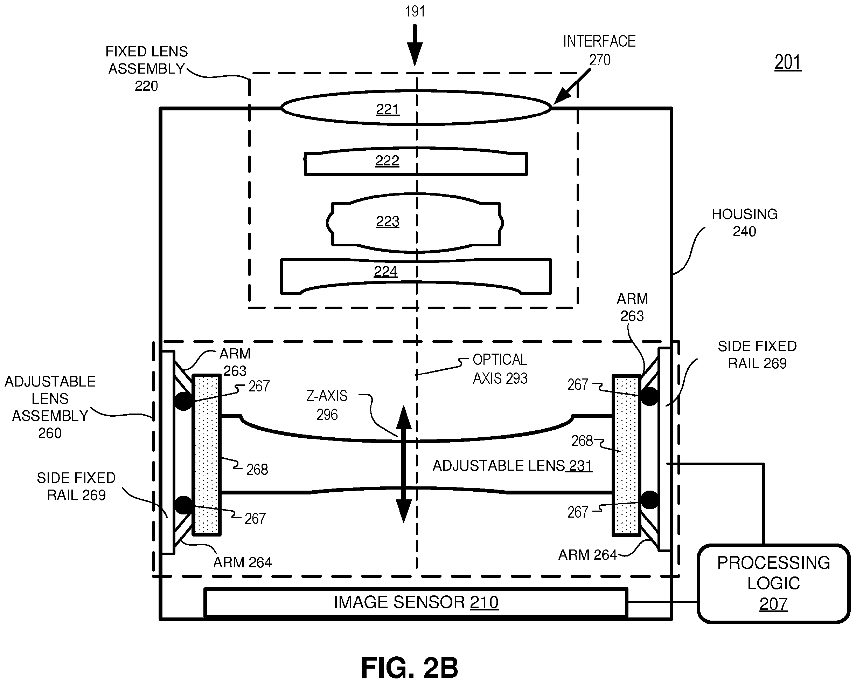

FIG. 2B illustrates an example diagram of a digital camera module 201 having an adjustable lens assembly 260 that includes rails and ball bearings, in accordance with embodiments of the disclosure. Adjustable lens assembly 260 includes side fixed rails 269, optional suspension arms 263 and 264, ball bearings 267, rails 268, and an adjustable lens 231. Ball bearings 267 are disposed between the side fixed rails 269 and rails 268. The ball bearings 267 may provide definite spacing between side fixed rails 269 and rails 268. Rails 268 are coupled to the perimeter of adjustable lens 231. As arms 263 and 264 expand and contract, the ball bearings 267 may provide smooth movement as adjustable lens 231 is adjusted along z-axis 296 to focus image light 191 to image sensor 210. Suspension arms 263 and 264 are not included in some implementations.

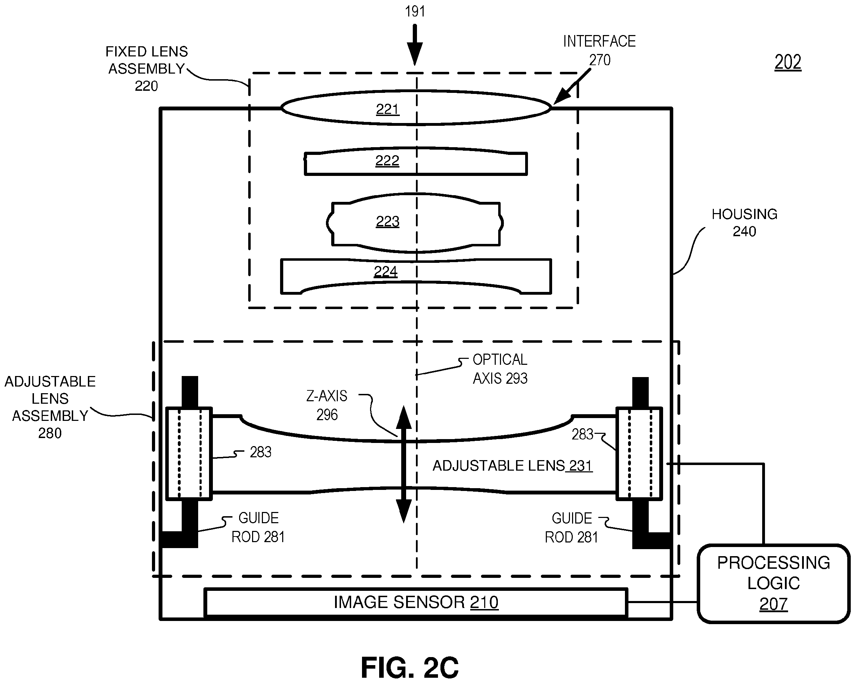

FIG. 2C illustrates an example diagram of a digital camera module 202 having an adjustable lens assembly 280 that includes guide rods, in accordance with embodiments of the disclosure. Adjustable lens assembly 280 includes adjustable lens 231, guide mechanisms 283, and guide rods 281. Guide mechanisms 283 are coupled to the perimeter of adjustable lens 231. One or more guide rods 281 may be coupled to the housing 240 of module 202. Guide mechanisms 283 are positioned around guide rod(s) 281 so that guide rod(s) 281 run through a void in the guide mechanism 283. The void in guide mechanism 283 is illustrated with dashed lines in FIG. 2C. Guide mechanisms 283 slide up and down guide rods 281 as adjustable lens 231 is adjusted along z-axis 296 to focus image light 191 to image sensor 210. Hence, the guide rods 281 keep adjustable lens 231 aligned along z-axis 296 for different focal lengths. Arms similar to arms 233 and 234 or other MEMS device (not illustrated) may provide the mechanical movement to slide adjustable lens 231 up and down guide rods 281, in camera module 202.

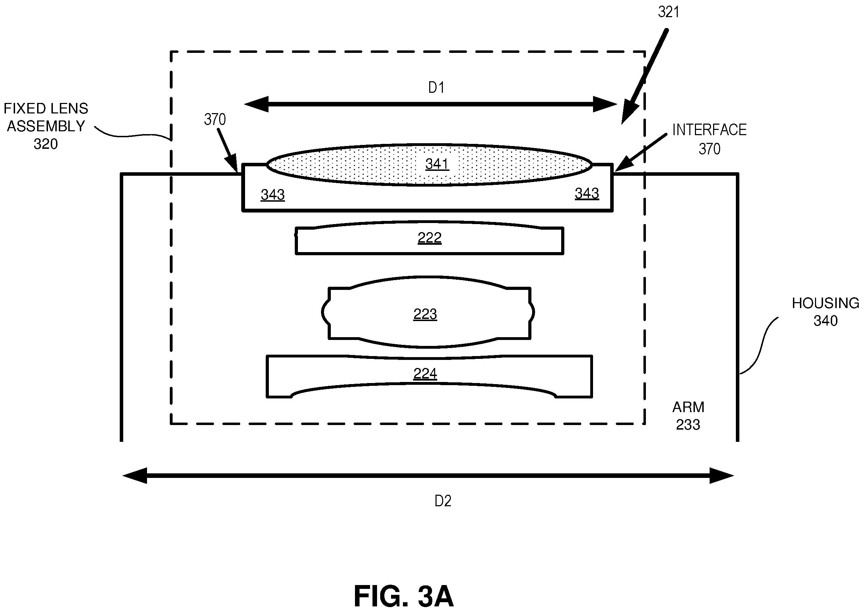

FIG. 3A shows an example fixed lens assembly 320 that includes an optical element 321 with a glass refractive lens 341, in accordance with embodiments of the disclosure. In FIG. 3A, fixed lens assembly 320 includes optical elements 321, 222, 223, and 224. Optical element 321 includes a glass lens portion 341 and an interface portion 343. Optical element 321 may be considered the outermost optical element of fixed lens assembly 320. A hard glass lens portion 341 may prevent scratching of optical element 321 (e.g. when compared to plastic) since it may be exposed to the external environment. Interface portion 343 may be configured to surround and support glass lens portion 341. Interface portion 343 of optical element 321 may contact housing 340 at interface 370.

FIG. 3A shows that in some implementations, an outermost lens (e.g. optical element 321) of fixed lens assembly 320 may have a larger width (D1) than other optical elements (e.g. 222, 223, and 224) of fixed lens assembly 320. In implementations, an outermost lens (e.g. optical element 321) of fixed lens assembly 320 has a width (D1). Also shown in FIG. 3A, housing 340 may be wider (dimension D2) than an outermost lens (e.g. optical element 321) of fixed lens assembly 320.

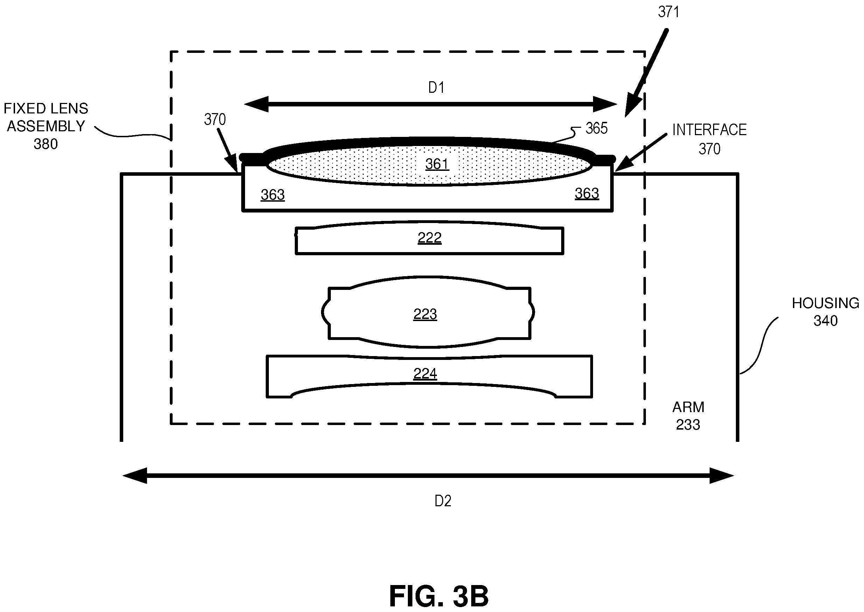

FIG. 3B shows an example fixed lens assembly 380 that includes an optical element 371 with a plastic refractive lens 361, in accordance with embodiments of the disclosure. In FIG. 3B, fixed lens assembly 380 includes optical elements 371, 222, 223, and 224. Optical element 371 includes a plastic lens portion 361, an interface portion 363, and a hard-coating 365 to protect plastic lens portion 361 from scratches since it may be exposed to the external environment. Plastic lens portion 361 is disposed between hard-coating 365 and interface portion 363. Optical element 371 may be considered the outermost optical element of fixed lens assembly 380. Interface portion 363 may be configured to surround and support plastic lens portion 361. Interface portion 363 of optical element 371 may contact housing 340 at interface 370.

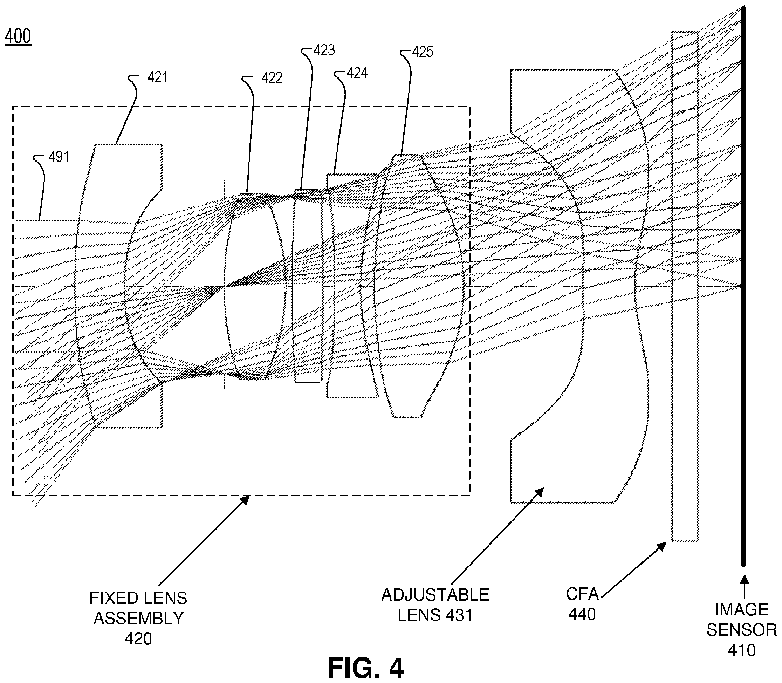

FIG. 4 illustrates a diagram of an example camera module 400 that includes a fixed lens assembly 420 and an adjustable lens 431, in accordance with embodiments of the disclosure. In FIG. 4, fixed lens assembly 420 includes refractive lenses 421, 422, 423, 424, and 425. In FIG. 4, adjustable lens 431 is the only lens element in an adjustable lens assembly. A color filter array (CFA) 440 may be disposed between image sensor 410 and adjustable lens 431. Adjustable lens 431 is disposed between image sensor 410 and fixed lens assembly 420, in FIG. 4. In the illustrated example of FIG. 4, outermost lens 421 is a refractive optical lens. Outermost lens 421 may be a negative meniscus lens. Adjustable lens 431 is wider than each of the plurality of optical elements 421, 422, 423, 424, and 425 in fixed lens assembly 420, in the illustrated example.

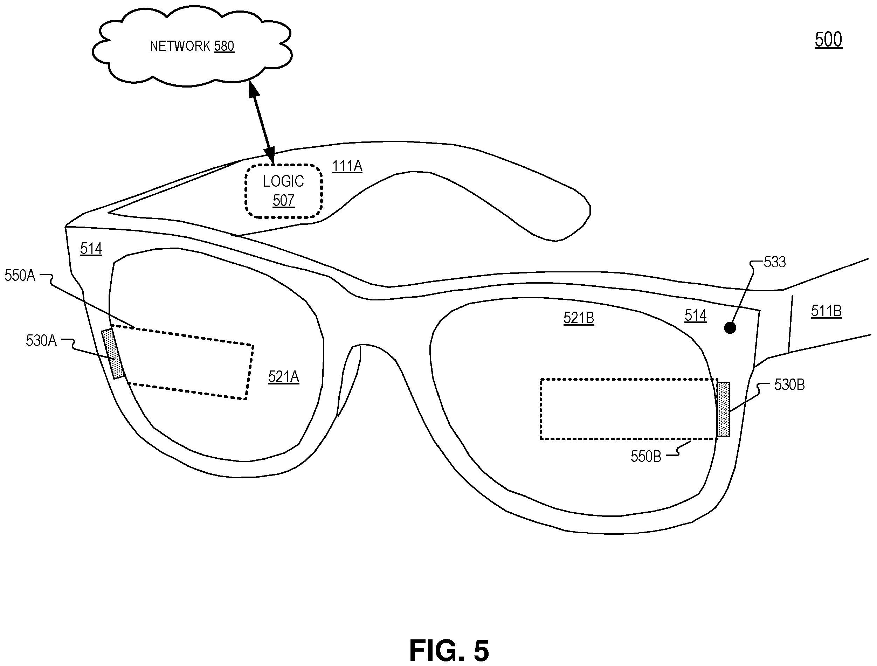

FIG. 5 illustrates an example implementation of a head-mounted device 500 that may incorporate the disclosed camera module as camera module 533, in accordance with embodiments of the disclosure. The head-mounted device 500 may be implemented as an augmented reality (AR) headset that is considered a head-mounted display (HMD) 500. While device 500 is presented as an example device that may include a camera module including features of the disclosure, other devices may also include a camera module including features described herein. Device 500 may be considered a "wearable." In some implementations of the disclosure, other wearable devices may include camera modules that include features described herein.

HMD 500 includes frame 514 coupled to arms 511A and 511B. Lens assemblies 521A and 521B are mounted to frame 514. Lens assemblies 521A and 521B may include a prescription lens matched to a particular user of HMD 500. The illustrated HMD 500 is configured to be worn on or about a head of a wearer of HMD 500.

In some implementations, camera module 533 may capture images of an external environment of HMD 500. Camera module 533 is disposed within frame 514, in FIG. 5.

In the HMD 500 illustrated in FIG. 5, each lens assembly 521A/521B includes a waveguide 550A/550B to direct display light generated by displays 530A/530B to an eyebox area for viewing by a user of HMD 500. Displays 530A/530B may include a beam-scanning display or a liquid crystal on silicon (LCOS) display for directing display light to a wearer of HMD 500 to present virtual images, for example.

Lens assemblies 521A and 521B may appear transparent to a user to facilitate augmented reality or mixed reality to enable a user to view scene light from the environment around them while also receiving display light directed to their eye(s) by, for example, waveguides 550. Lens assemblies 521A and 521B may include two or more optical layers for different functionalities such as display, eye-tracking, and optical power. In some embodiments, display light from display 530A or 530B is only directed into one eye of the wearer of HMD 500. In an embodiment, both displays 530A and 530B are used to direct display light into waveguides 550A and 150B, respectively. The implementations of the disclosure may also be used in head mounted devices (e.g. smartglasses) that don't necessarily include a display but are configured to be worn on or about a head of a wearer.

Frame 514 and arms 511 may include supporting hardware of HMD 500 such as processing logic 507, a wired and/or wireless data interface for sending and receiving data, graphic processors, and one or more memories for storing data and computer-executable instructions. Processing logic 507 may include circuitry, logic, instructions stored in a machine-readable storage medium, ASIC circuitry, FPGA circuitry, and/or one or more processors. In one embodiment, HMD 500 may be configured to receive wired power. In one embodiment, HMD 500 is configured to be powered by one or more batteries. In one embodiment, HMD 500 may be configured to receive wired data including video data via a wired communication channel. In one embodiment, HMD 500 is configured to receive wireless data including video data via a wireless communication channel. Processing logic 507 may be communicatively coupled to a network 580 to provide data to network 580 and/or access data within network 580. The communication channel between processing logic 507 and network 580 may be wired or wireless.

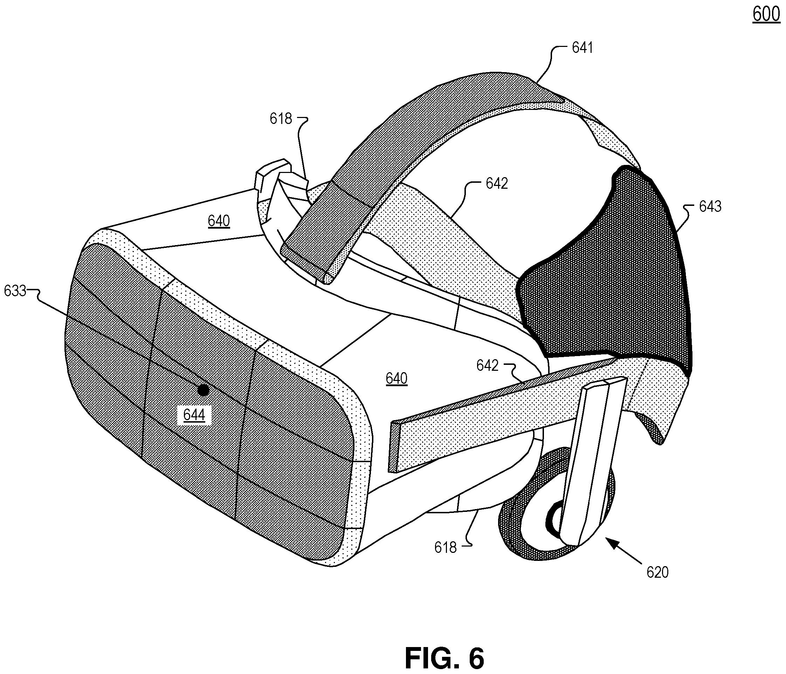

FIG. 6 illustrates a head-mounted display (HMD) 600 that may incorporate the disclosed camera module as camera module 633, in accordance with embodiments of the present disclosure. In implementations, HMD 600 may include a camera module 633 having features as described above in connection with FIGS. 1-5. An HMD, such as HMD 600, is one type of head mounted device, typically worn on the head of a user to provide artificial reality content to a user.

The illustrated example of HMD 600 is shown as including a viewing structure 640, a top securing structure 641, a side securing structure 642, a rear securing structure 643, and a front rigid body 644. Components 641, 642, 643, and 644 may be included in a frame of HMD 600 and camera module 633 may be disposed with the frame. In some examples, the HMD 600 is configured to be worn on a head of a user of the HMD 600, where the top securing structure 641, side securing structure 642, and/or rear securing structure 643 may include a fabric strap including elastic as well as one or more rigid structures (e.g., plastic) for securing the HMD 600 to the head of the user. HMD 600 may also optionally include one or more earpieces 620 for delivering audio to the ear(s) of the user of the HMD 600.

The illustrated example of HMD 600 also includes an interface membrane 618 for contacting a face of the user of the HMD 600, where the interface membrane 618 functions to block out at least some ambient light from reaching the eyes of the user of the HMD 600.

Example HMD 600 may also include a chassis for supporting hardware of the viewing structure 640 of HMD 600 (underlying chassis and hardware not explicitly illustrated in FIG. 6). The hardware of viewing structure 640 may include any of processing logic, wired and/or wireless data interface for sending and receiving data, graphic processors, and one or more memories for storing data and computer-executable instructions. In one example, viewing structure 640 may be configured to receive wired power and/or may be configured to be powered by one or more batteries. In addition, viewing structure 640 may be configured to receive wired and/or wireless data including video data.

Viewing structure 640 may include a display system having one or more electronic displays for directing display light to the eye(s) of a user of HMD 600. The display system may include one or more of an LCD, an organic light emitting diode (OLED) display, or micro-LED display for emitting light (e.g., content, images, video, etc.) to a user of HMD 600. Camera module 633 may be configured to capture images of an external environment of HMD 600 and the images (or images derived from those images of the external environment) may be driven onto the display. Camera module 633 may capture "pass-through" images that are driven onto the display so that users of HMD 600 can navigate the external environment. Virtual images may be added to the pass-through images captured by camera module 633.

The disclosed digital camera modules may provide various advantages over traditional digital camera modules. For example, even while including several lenses (e.g., six lenses), an overall stack height may be lower than other implementations. The dimensions of the first lens may be implemented with a smaller footprint than those needed for glass coverings that are not integrated into the housing. A lack of lateral obstructions for carrying the first lens may enable the digital camera module to receive and pass more light to the image sensor, which may result in better image quality. The adjustable lens may be displaced up to, for example, 27 um in either direction, which may result in +/- 4 diopters change in focus, according to an embodiment. In an implementation, the displacement of the adjustable lens may result in +/- 2.5 diopters change in focus. As another example, the adjustable lens assembly of the disclosed digital camera module may produce a focusing breathing effect that is imperceptible to a user of the digital camera module. Focusing breathing effect is the phenomenon associated with a change (e.g., reduction or expansion) of the overall field of view of an image sensor that is response to focusing or defocusing a lens or lens assembly. In AR/VR applications, focusing breathing effect can be detrimental to a user's immersive experience.

Embodiments of the invention may include or be implemented in conjunction with an artificial reality system. Artificial reality is a form of reality that has been adjusted in some manner before presentation to a user, which may include, e.g., a virtual reality (VR), an augmented reality (AR), a mixed reality (MR), a hybrid reality, or some combination and/or derivatives thereof. Artificial reality content may include completely generated content or generated content combined with captured (e.g., real-world) content. The artificial reality content may include video, audio, haptic feedback, or some combination thereof, and any of which may be presented in a single channel or in multiple channels (such as stereo video that produces a three-dimensional effect to the viewer). Additionally, in some embodiments, artificial reality may also be associated with applications, products, accessories, services, or some combination thereof, that are used to, e.g., create content in an artificial reality and/or are otherwise used in (e.g., perform activities in) an artificial reality. The artificial reality system that provides the artificial reality content may be implemented on various platforms, including a head-mounted display (HMD) connected to a host computer system, a standalone HMD, a mobile device or computing system, or any other hardware platform capable of providing artificial reality content to one or more viewers.

The term "processing logic" (e.g. processing logic 207 or processing logic 507) in this disclosure may include one or more processors, microprocessors, multi-core processors, Application-specific integrated circuits (ASIC), and/or Field Programmable Gate Arrays (FPGAs) to execute operations disclosed herein. In some embodiments, memories (not illustrated) are integrated into the processing logic to store instructions to execute operations and/or store data. Processing logic may also include analog or digital circuitry to perform the operations in accordance with embodiments of the disclosure.

A "memory" or "memories" described in this disclosure may include one or more volatile or non-volatile memory architectures. The "memory" or "memories" may be removable and non-removable media implemented in any method or technology for storage of information such as computer-readable instructions, data structures, program modules, or other data. Example memory technologies may include RAM, ROM, EEPROM, flash memory, CD-ROM, digital versatile disks (DVD), high-definition multimedia/data storage disks, or other optical storage, magnetic cassettes, magnetic tape, magnetic disk storage or other magnetic storage devices, or any other non-transmission medium that can be used to store information for access by a computing device.

Networks may include any network or network system such as, but not limited to, the following: a peer-to-peer network; a Local Area Network (LAN); a Wide Area Network (WAN); a public network, such as the Internet; a private network; a cellular network; a wireless network; a wired network; a wireless and wired combination network; and a satellite network.

Communication channels may include or be routed through one or more wired or wireless communication utilizing IEEE 802.11 protocols, short-range wireless protocols, SPI (Serial Peripheral Interface), I2C (Inter-Integrated Circuit), USB (Universal Serial Port), CAN (Controller Area Network), cellular data protocols (e.g. 3G, 4G, LTE, 5G), optical communication networks, Internet Service Providers (ISPs), a peer-to-peer network, a Local Area Network (LAN), a Wide Area Network (WAN), a public network (e.g. "the Internet"), a private network, a satellite network, or otherwise.

A computing device may include a desktop computer, a laptop computer, a tablet, a phablet, a smartphone, a feature phone, a server computer, or otherwise. A server computer may be located remotely in a data center or be stored locally.

The processes explained above are described in terms of computer software and hardware. The techniques described may constitute machine-executable instructions embodied within a tangible or non-transitory machine (e.g., computer) readable storage medium, that when executed by a machine will cause the machine to perform the operations described. Additionally, the processes may be embodied within hardware, such as an application specific integrated circuit ("ASIC") or otherwise.

A tangible non-transitory machine-readable storage medium includes any mechanism that provides (i.e., stores) information in a form accessible by a machine (e.g., a computer, network device, personal digital assistant, manufacturing tool, any device with a set of one or more processors, etc.). For example, a machine-readable storage medium includes recordable/non-recordable media (e.g., read only memory (ROM), random access memory (RAM), magnetic disk storage media, optical storage media, flash memory devices, etc.).

The above description of illustrated embodiments of the claimed invention, including what is described in the Abstract, is not intended to be exhaustive or to limit the claimed invention to the precise forms disclosed. While specific embodiments of, and examples for, the claimed invention are described herein for illustrative purposes, various modifications are possible within the scope of the claimed invention, as those skilled in the relevant art will recognize.

These modifications can be made to the claimed invention in light of the above detailed description. The terms used in the following claims should not be construed to limit the claimed invention to the specific embodiments disclosed in the specification. Rather, the scope of the claimed invention is to be determined entirely by the following claims, which are to be construed in accordance with established doctrines of claim interpretation.

## Claims

1. A digital camera module comprising:
a housing;
an image sensor;
a fixed lens assembly at least partially coupled to the housing; and
an adjustable lens assembly positioned within the housing between the image sensor and the fixed lens assembly, wherein the adjustable lens assembly is configured to selectively modify a focal length of the digital camera module.

2. The digital camera module of claim 1, wherein the fixed lens assembly seals an opening of the housing.

3. The digital camera module of claim 1 or claim 2, wherein the adjustable lens assembly includes an optical element, suspension arms, and side supports,
wherein the suspension arms are configured to selectively retract to displace the optical element along an optical axis of the adjustable lens assembly, and
optionally wherein the suspension arms include two upper arms and two lower arms, wherein the two upper arms are configured to displace the optical element towards the fixed lens assembly, wherein the two lower arms are configured to displace the optical element towards the image sensor, and/or
optionally wherein the suspension arms include micro-electromechanical systems, MEMS, devices or include springs.

4. The digital camera module of any preceding claim, wherein the adjustable lens assembly is configured to modify the focal length of the digital camera module with focusing breathing effect that is imperceptible to a user of the digital camera module.

5. The digital camera module of any preceding claim, wherein the fixed lens assembly includes a plurality of optical elements optically aligned to direct incident light towards the adjustable lens assembly.

6. The digital camera module of claim 5, wherein:
an outermost lens of the plurality of optical elements includes glass, or
an outermost lens of the plurality of optical elements includes plastic, and wherein the plastic outermost lens is covered by a hard-coating.

7. The digital camera module of claim 5 or claim 6, wherein the housing is wider than an outermost lens of the plurality of optical elements.

8. The digital camera module of any of claims 5 to 7, wherein an interface between the housing and an outermost lens of the plurality of optical elements is waterproof.

9. The digital camera module of any of claims 5 to 8, wherein the outermost lens is a negative meniscus lens.

10. The digital camera module of any of claims 5 to 9, wherein the outermost lens has a larger width than the other optical elements in the fixed lens assembly, and wherein the adjustable lens assembly includes an adjustable lens that is wider than each of the plurality of optical elements in the fixed lens assembly.

11. The digital camera module of any preceding claim, wherein the adjustable lens assembly includes an optical element, ball bearings, side supports, and rails, and wherein the ball bearings are disposed between the side supports and the rails coupled to a perimeter of the optical element in the adjustable lens assembly.

12. The digital camera module of any preceding claim, wherein the adjustable lens assembly includes an optical element, guide mechanisms, and guide rods, the guide mechanisms positioned around the guide rods so that the guide rods run through a void in the guide mechanisms, and wherein the guide mechanisms are coupled to a perimeter of the optical element.

13. A head-mounted device comprising:
a frame; and
a digital camera module according to any preceding claim.

14. The head-mounted device of claim 13 further comprising:
a display configured to present display light to an eyebox region, wherein the
camera module is configured to capture images of an external environment of the head-mounted device, and wherein the images of the external environment are driven onto the display.

15. A wearable comprising:
an image sensor;
a fixed lens assembly having an outermost lens that has a waterproof seal to prevent external contaminants from entering the fixed lens assembly and the image sensor; and
an adjustable lens assembly positioned between the image sensor and the fixed lens assembly, wherein the adjustable lens assembly is configured to selectively modify a focal length of the camera module.
